# EUROPÄISCHE PATENTSCHRIFT

(11) **EP 0 610 570 B1**
(45) Veröffentlichungstag und Bekanntmachung des Hinweises auf die Patenterteilung: **20.03.1996**
(21) Anmeldenummer: 93119775.0
(22) Anmeldetag: 08.12.1993
(51) Int. Cl.: H02K 5/15, H02K 5/26

(54) **Elektrische Maschine, insbesondere Drehstromgenerator für Brennkraftmaschinen**
Electric machine, in particular three-phase alternator for power combustion engine
Machine électrique, en particulier alternateur triphasé pour machines motrices à combustion

(30) Priorität: 10.02.1993 DE 9301825 U
(43) Veröffentlichungstag der Anmeldung: 17.08.1994
(73) Patentinhaber: ROBERT BOSCH GMBH, D-70442 Stuttgart (DE)
(72) Erfinder: Fasterding, Henning, Ing., D-71706 Markgroeningen (DE); Bauer, Rainer, Dipl.-Ing., D-74199 Untergruppenbach (DE); Bilsing, Thomas, Ing., D-76467 Bietigheim (DE)

(56) Entgegenhaltungen:
- EP-A- 0 274 307
- DE-A- 2 309 070
- DE-A- 3 704 157

## Beschreibung

### Stand der Technik

Die Erfindung geht aus von einer elektrischen Maschine, insbesondere von einem Drehstromgenerator für Brennkraftmaschinen nach dem Oberbegriff des Hauptanspruchs.

Bei einer derartigen, aus der DE-OS 40 28 464 bekannten Drehstrom-Lichtmaschine für Kraftfahrzeuge, sind an der antriebsseitigen Gehäusehälfte vier am Umfang verteilte Senkungen angebracht, in denen sowohl die Befestigungslaschen des Ständerblechpaketes liegen als auch vier axial vorstehende Podeste der schleifringseitigen Gehäusehälfte eintauchen. Der gesamte Verband wird an diesen vier Stellen axial verschraubt und tangential mittels der Senkungen und Podeste fixiert. Die Zentrierung in Radialrichtung erfolgt über eine wechselseitige Überlappung der Gehäusehälften über die Mittellamellen des Ständerblechpaketes. Aufgrund der Fertigungstoleranzen haben die eintauchenden Podeste der schleifringseitigen Gehäusehälfte wesentlich geringere Durchmesser als die Senkungen in der antriebsseitigen Gehäusehälfte.

Dies hat im ungünstigen Toleranzfall ein großes Verdrehspiel in Umfangsrichtung zur Folge mit dem Nachteil, daß die erforderliche Fluchtung in der Schwenkarmbohrung der antriebsseitigen Gehäusehälfte zur Schwenkarmbohrung der schleifringseitigen Gehäusehälfte nicht gewährleistet ist. Sofern neben der Schwenkarmbefestigung der Maschine auch noch ein Haltearm an beiden Gehäusehälften vorhanden ist, gilt dies auch für dessen Befestigungsbohrung.

Mit der vorliegenden Lösung wird angestrebt, die Fluchtung der Schwenkarmbohrungen in beiden Gehäusehälften dadurch zu erreichen, daß das Verdrehspiel der beiden Gehäusehälften in Umfangsrichtung möglichst gering wird.

### Vorteile der Erfindung

Die erfindungsgemäße Ausbildung der elektrischen Maschine mit den kennzeichnenden Merkmalen des Hauptanspruchs hat den Vorteil, daß mit einfachen Mitteln eines der Podeste als Zentrierpodest ausgebildet werden kann, der lediglich in Umfangsrichtung in die ihm zugeordnete Einsenkung eingreift und so das Verdrehspiel der beiden Gehäusehälften so eng begrenzt, daß beide Gehäusehälften bei fluchtenden Schwenkarmbohrungen ineinander eingreifend zu montieren sind. Als weiterer Vorteil ist anzusehen, daß die übrigen Podeste ohne nachträgliche Bearbeitung am Außenumfang auch mit großen Herstellungstoleranzen in die entsprechenden Einsenkungen der anderen Gehäusehälfte einsetzbar sind, da sie lediglich die Vorsprünge des Blechpaketes erfassen müssen, um den Ständer der Maschine zwischen den Gehäusehälften einspannen zu können.

Durch die in den Unteransprüchen aufgeführten Maßnahmen ergeben sich vorteilhafte Weiterbildungen und Verbesserungen des im Hauptanspruch angegebenen Merkmals.

### Zeichnung

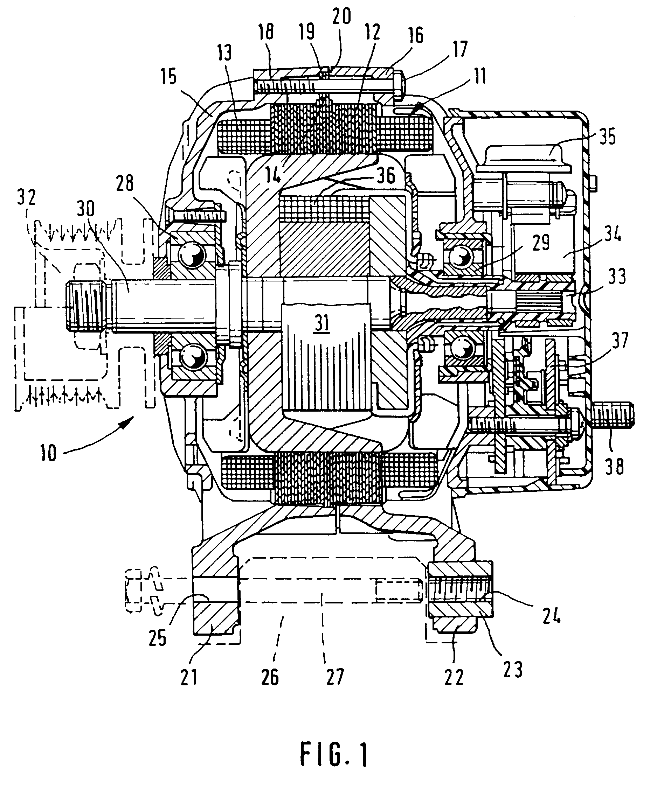

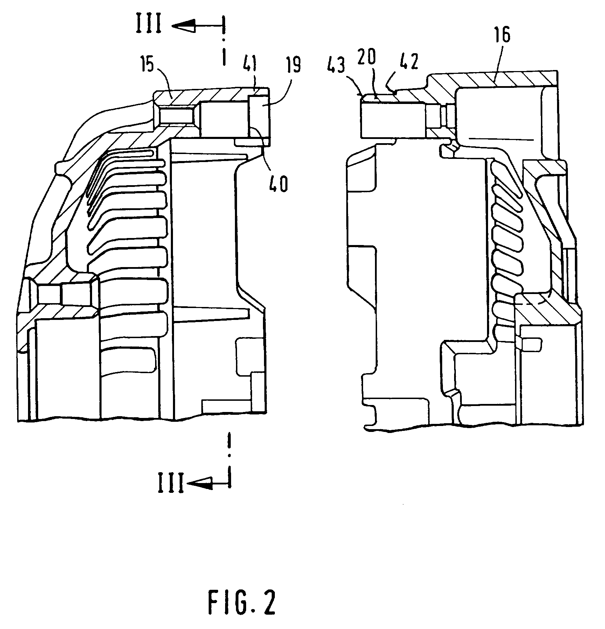

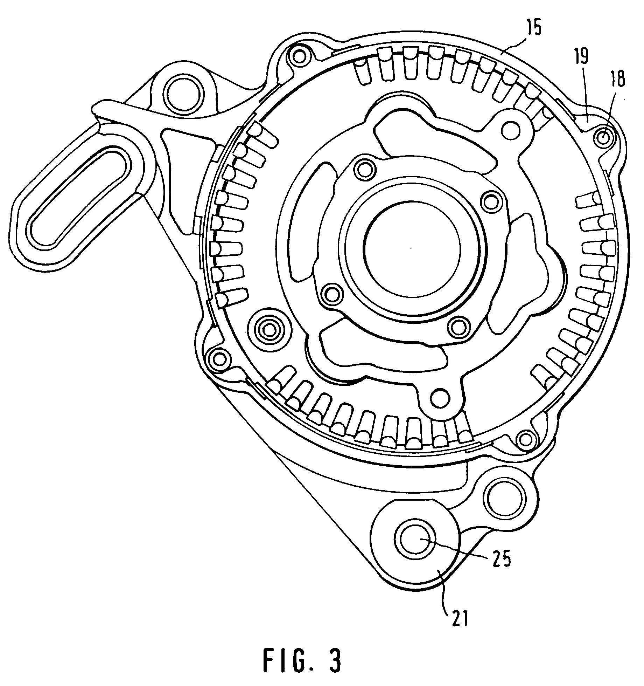

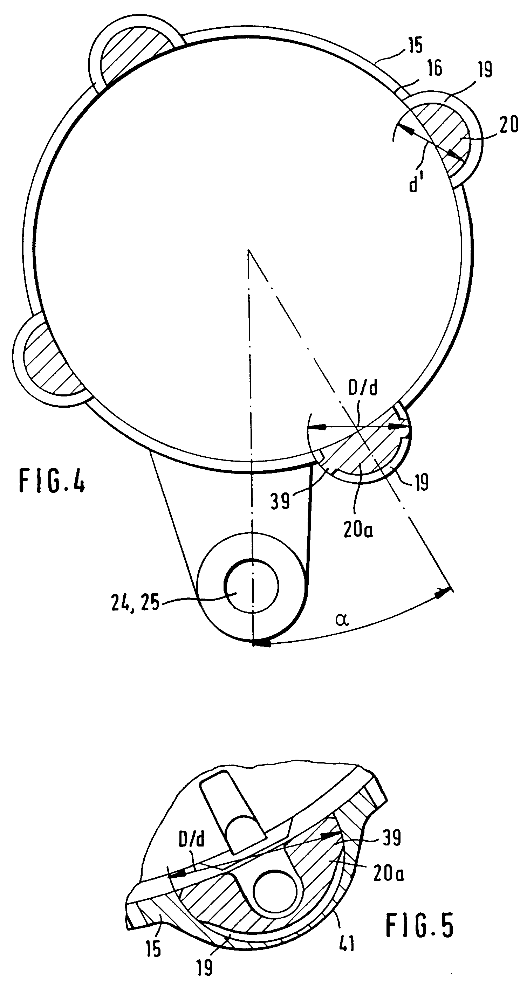

Ein Ausführungsbeispiel der Erfindung ist in der Zeichnung dargestellt und in der nachfolgenden Beschreibung näher erläutert. Es zeigen Figur 1 einen Drehstromgenerator für Brennkraftmaschinen im Längsschnitt, Figur 2 einen Längsschnitt im oberen Teil zweier Gehäusehälften des Generators vor dem Zusammenbau, Figur 3 zeigt die Draufsicht der antriebsseitigen, mit Einsenkungen versehenen Gehäusehälfte nach III-III aus Figur 2, Figur 4 zeigt in schematischer Darstellung diese Gehäusehälfte mit den darin eingreifenden Podesten der zweiten Gehäusehälfte und Figur 5 zeigt in vergrößerter Darstellung den Eingriff des Zentrierpodestes in die entsprechende Einsenkung.

### Beschreibung des Ausführungsbeispiels

In Figur 1 ist ein Drehstromgenerator für Brennkraftmaschinen mit Gleichrichter-Einheit und Regler mit 10 bezeichnet. Sein Ständer 11 besteht aus einem Blechpaket 12, in dem die drei Phasen einer Drehstromwicklung 13 angeordnet sind. Der Ständer 11 ist mit am Außenumfang des Blechpaketes an dessen Mittellamellen angeformten Vorsprüngen 14 zwischen zwei Gehäusehälften 15, 16 eingespannt, indem mehrere am Umfang verteilte Befestigungsschrauben 17 durch entsprechende Bohrungen der einen Gehäusehälfte 16 und der Vorsprünge 14 hindurch in entsprechenden Gewindebohrungen 18 der anderen Gehäusehälfte 15 eingeschraubt sind. Die Vorsprünge 14 des Blechpaketes 12 sind dabei einerseits in axiale Einsenkungen 19 im Umfangsbereich der einen antriebsseitigen Gehäusehälfte 15 eingesetzt und liegen dort am Boden dieser Einsenkungen 19 auf. Auf der gegenüberliegenden Seite der Vorsprünge 14 befindet sich jeweils ein Podest 20 im Umfangsbereich der anderen, bürstenseitigen Gehäusehälfte 16.

Der Querschnitt der Podeste 20 ist dabei geringer als der der Einsenkungen 19, so daß die Podeste 20 in die Einsenkungen 19 eintauchen, um den Ständer 11 zwischen den beiden Gehäusehälften 15 und 16 einzuspannen. Am Umfang der Gehäusehälften 15, 16 ist dabei jeweils mindestens ein Schwenkarm 21, 22 angeformt, von denen einer eine Buchse 23 trägt, die mit einer Gewindebohrung 24 versehen ist. Diese Schwenkarm-Gewindebohrung muß mit einer weiteren Schwenkarmbohrung 25 des anderen Schwenkarmes 21 fluchten, um - wie gestrichelt angedeutet - an einer Konsole 26 der Brennkraftmaschine mittels eines Lagerbolzens 27 schwenkbar montiert zu werden. Die Gehäusehälften 15 und 16 sind jeweils mit einem Kugellager 28, 29 versehen, welche die Läuferwelle 30 eines Klauenpolläufers 31 aufnehmen, der mit dem Ständer 11 zusammenwirkt. Am antriebsseitigen Ende der Läuferwelle 30 ist - wie gestrichelt angedeutet - eine Riemenscheibe 32 aufsetzbar und am gegenüberliegenden Ende der Läuferwelle 30 ist eine Schleifringanordnung 33 befestigt, die über einen Bürstenhalter 34 einen von einem Regler 35 gesteuerten Erregerstrom einer Erregerwicklung 36 des Klauenpolläufers 31 zuführt. Der Regler 35 befindet sich ebenso wie eine Gleichrichtereinheit 37 zur Umwandlung des Drehstroms in Gleichstrom sowie die Anschlußklemmen 38 an der Stirnseite der bürstenseitigen Gehäusehälfte 16.

Aus den Figuren 3 und 4 ist erkennbar, daß die Einsenkungen 19 in der antriebsseitigen Gehäusehälfte 15 und die in innen eintauchenden Podeste 20 der bürstenseitigen Gehäusehälfte 16 jeweils einen halbkreisförmigen Querschnitt haben, die im wesentlichen den ebenfalls halbkreisförmigen Vorsprüngen 14 des Blechpaketes 12 entsprechen. In der schematischen Darstellung nach Figur 4 ist erkennbar, daß einer der Podeste 20 als Zentrierpodest 20a ausgebildet ist, der in Umfangsrichtung des Generators 10 formschlüssig in die ihm zugeordnete Einsenkung 19 der anderen Gehäusehälfte 15 eintaucht.

Der Durchmesser der übrigen halbkreisförmigen Podeste 20 ist hier mindestens 10 % kleiner gewählt als der Durchmesser der Einsenkungen 19. Für ein formschlüssiges Eintauchen des Zentrierpodestes 20a ist dieses beidseitig in Umfangsrichtung der Gehäusehälfte 16 mit noppenförmigen Verbreiterungen 39 versehen, die bis an den Umfang der ihnen zugeordneten Einsenkung 19 heranreichen. Dadurch ergibt sich zwischen dem Zentrierpodest 20a und der Einsenkung 19 im Bereich der Noppen-Verbreiterung 19 in Umfangsrichtung ein Paßsitz, wobei die Noppen-Verbreiterungen 39 auf den erforderlichen Durchmesser mittels Kronensenker abgedreht ist. Da auch die Einsenkungen 19 der antriebsseitigen Gehäusehälfte 15 und der Boden 40 zur Auflage des Ständers 11 spanend hergestellt ist, ergibt sich hier ein Paßsitz, wobei im Ausführungsbeispiel die Einsenkung 19 einen Durchmesser D = 20.2 + 0,1 mm und die Noppen-Verbreiterung 39 des Zentrierpodestes 20a einen Durchmesser d = 20.1 - 0,1 mm aufweist. Bei der Herstellung dieses Paßsitzes ist jeweils der Winkel α zur Schwenklagerbohrung 24 bzw. 25 eingehalten, so daß nach dem Zusammenbau des Generators 10 diese Bohrungen miteinander fluchten. Die übrigen Podeste 20 haben im Beispielsfall einen wesentlich kleineren Durchmesser von d' = 18 ± 0,5 mm. Um das axiale Zusammenfügen der beiden Gehäusehälften 15, 16 am Zentrierpodest zu erleichtern ist die das Zentrierpodest 20 a aufnehmende Einsenkung 19 mit einem gegenüber den anderen Einsenkungen 19 weiter vorgezogenen Kragen 41 versehen und die ihm gegenüberliegende Kante 42 am Zentrierpodest 20a ist entsprechend weiter zurückgesetzt. Als Einführhilfe ist ferner vorgesehen, am Zentrierpodest 20a bzw. am Kragen 41 der Einsenkung 19 vorn eine Einführ-Anfasung 43 anzubringen.

Im Rahmen der Erfindung ist es auch möglich, lediglich die Einsenkung für den Zentrierpodest 20a größer aufzubohren und die anderen Einsenkungen mit Ausnahme der Auflagefläche am Boden 40 unbearbeitet zu lassen.

## Patentansprüche

1. Elektrische Maschine, insbesondere Drehstromgenerator für Brennkraftmaschinen, mit einem zweiteiligen, miteinander verschraubten Gehäuse zum Einspannen eines Ständers, an dessen Außenumfang seines Blechpaketes (12) mindestens eine Mittellamelle mehrere radial nach außen vorstehende, mit Befestigungslöchern versehene Vorsprünge (14) aufweist, die einerseits im Umfangsbereich der einen Gehäusehälfte in axiale Einsenkungen (19) auf deren Boden aufliegen und andererseits von jeweils einem in die Einsenkungen eintauchenden kleineren Podest (20) im Umfangsbereich der anderen Gehäusehälfte mit Befestigungsschrauben zwischen beiden Gehäusehälften (15,16) eingespannt sind, wobei beide Gehäusehälften mindestens eine Schwenkarmbohrung aufweisen, dadurch gekennzeichnet, daß zum Fluchten der einander zugeordneten Schwenkarmbohrungen (24, 25) ein Verdrehspiel beider Gehäusehälften (15, 16) gegeneinander dadurch eng begrenzt ist, daß mindestens eines der Podeste (20) der einen Gehäusehälfte (16) als Zentrierpodest (20a) in Umfangsrichtung formschlüssig in die zugeordnete Einsenkung (19) der anderen Gehäusehälfte (15) eintaucht.

2. Elektrische Maschine nach Anspruch 1, dadurch gekennzeichnet, daß die Einsenkungen (19) und Podeste (20, 20 a) der beiden Gehäusehälften (15, 16) halbkreisförmigen Querschnitt haben, wobei das Zentrierpodest (20 a) zumindest in einem Umfangsbereich mit einem Paßsitz (D, d) in die Einsenkung (19) eintaucht.

3. Elektrische Maschine nach Anspruch 2, dadurch gekennzeichnet, daß der Durchmesser (d') der übrigen Podeste (20) mindestens 10 % kleiner als der Durchmesser D der Einsenkung (19) ist, wobei das Zentrierpodest (20a) beidseitig in Umfangsrichtung der Gehäusehälfte (16) noppenförmig bis auf den Durchmesser (D) der ihm zugeordneten Einsenkung (19) verbreitert ist.

4. Elektrische Maschine nach Anspruch 3, dadurch gekennzeichnet, daß das Zentrierpodest (20 a) an seiner Noppenverbreiterung (39) mindestens bis auf den Durchmesser D der Einsenkung (19) abgedreht ist.

5. Elektrische Maschine nach einem der vorhergehenden Ansprüche, dadurch gekennzeichnet, daß die das Zentrierpodest (20a) aufnehmende Einsenkung (19) einen gegenüber den anderen Einsenkungen (19) weiter vorgezogenen Kragen (41) hat und die ihm gegenüberliegende Kante (42) am Zentrierpodest (20 a) entsprechend weiter zurückgesetzt ist.

6. Elektrische Maschine nach Anspruch 5, dadurch gekennzeichnet, daß das Zentrierpodest (20a) und/oder der Kragen (41) der Einsenkung (19) vorn mit einer Anfasung (43) versehen ist.

## Claims

1. Electrical machine, in particular a three-phase alternator for internal combustion engines, having a two-component housing, which is screwed together, for clamping in a stator, at the external circumference of whose laminated core (12) at least one central laminate has a plurality of radially outwardly protruding projections (14) which are provided with attachment holes, on the one hand rest in axial depressions (19) on the floor of one half of the housing in the circumferential area of the said half of the housing and on the other hand are clamped in, using attachment screws, between the two halves of the housing in the area of the other half of the housing by in each case one relatively small platform which dips into the depressions, the two halves of the housing having at least one swivel arm hole, characterized in that, in order to align the swivel arm holes (24, 25) which are assigned to one another, a rotational play of the two halves (15, 16) of the housing with respect to one another is tightly limited in that at least one of the platforms (20) of the one half (16) of the housing dips, as a centring platform (20a), in the circumferential direction into the assigned depression (19) of the other half (15) of the housing in a positively engaging fashion.

2. Electrical machine according to Claim 1, characterized in that the depressions (19) and platforms (20, 20a) of the two halves (15, 16) of the housing have a semicircular cross-section, the centring platform (28) dipping into the depression (19) at least in a circumferential area, with a push fit (D, d).

3. Electrical machine according to Claim 2, characterized in that the diameter (d') of the other platforms (20) is at least 10% smaller than the diameter (D) of the depression (19), the centring platform (28) being widened on both sides in the circumferential direction of the half (16) of the housing in a knob shape as far as the diameter (D) of the depression (19) which is assigned to it.

4. Electrical machine according to Claim 3, characterized in that the centring platform (20 a) is turned at its knob widened portion (39) at least as far as the diameter (D) of the depression (19).

5. Electrical machine according to one of the preceding claims, characterized in that the depression (19) which receives the centring platform (20a) has a collar (41) which extends further forwards than the other depressions (19) and the edge (42) lying opposite it on the centring platform (20 a) is correspondingly further set back.

6. Electrical machine according to Claim 5, characterized in that the centring platform (20a) and/or the collar (41) of the depression (19) is provided at the front with a chamfer (43).

## Revendications

1. Machine électrique notamment alternateur pour moteur à combustion interne, comportant un boîtier formé de deux parties vissées l'une à l'autre pour recevoir un stator dont la périphérie extérieure de son paquet de tôles (12) comporte au moins une lamelle centrale avec plusieurs saillies (14) radiales, prévues avec des orifices de fixation, et s'appuyant d'une part dans la direction périphérique de l'une des moitiés de boîtier, dans des matriçages axiales (19) pour s'appuyer sur le sol et par ailleurs un pied plus petit (20), pénétrant dans les matriçages, dans la direction périphérique de l'autre moitié de boîtier, le serrage étant fait par des vis de fixation entre les deux moitiés de boîtier (15, 16), ces deux moitiés de boîtier ayant au moins un perçage de bras pivotant, caractérisée en ce que pour aligner les perçages de bras pivotants (24, 25) associés, le jeu de rotations des deux moitiés de boîtier (15, 16) est étroitement limité pour qu'au moins l'un des pieds (20) de la moitié de boîtier (16) pénètre comme pied de centrage (20a) dans la direction périphérique suivant une liaison par la forme, dans le matriçage correspondant (19) de l'autre moitié de boîtier (15).

2. Machine électrique selon la revendication 1, caractérisée en ce que les matriçages (19) et les pieds (20, 20a) des deux moitiés de boîtier (15, 16) ont une section en forme de demi-cercle, le pied de centrage (20a) pénétrant au moins dans une zone périphérique avec un siège pressé (D, d) dans la cavité (19).

3. Machine électrique selon la revendication 2, caractérisée en ce que le diamètre (d') des autres pieds (20) est au moins diminué de 10 % par rapport au diamètre (D) du matriçage (19), le pied de centrage (20a) étant élargi de part et d'autre dans la direction périphérique de la moitié de boîtier (16), à la manière d'un téton arrivant jusqu'au diamètre (D) du matriçage associé (19).

4. Machine électrique selon la revendication 3, caractérisée en ce que le pied de centrage (20a) est décolleté au niveau de son élargissement à téton (39), au moins jusqu'à niveau du diamètre (D) du matriçage (19).

5. Machine électrique selon l'une des revendications précédentes, caractérisée en ce que le matriçage (19) qui reçoit le pied de centrage (20a) possède un col (41) encore plus tiré vers l'avant par rapport à l'autre matriçage (19) et l'arête (42) en regard, est retirée de façon correspondante par rapport au pied de centrage (20a).

6. Machine électrique selon la revendication 5, caractérisée en ce que le pied de centrage (20a) et/ou la collerette (41) du matriçage (19) sont munis à l'avant, d'un congé (43).
